# EUROPEAN PATENT SPECIFICATION

(11) **EP 1 941 193 B1**
(45) Date of publication and mention of the grant of the patent: **03.04.2019**
(21) Application number: 06817352.5
(22) Date of filing: 24.10.2006
(51) Int. Cl.: F16K 1/38, F16K 31/54, F24F 13/10

(54) **LINEAR DRIVE FOR INTEGRATED DAMPER**
LINEARANTRIEB FÜR INTEGRIERTEN DÄMPFER
ENTRAINEMENT LINEAIRE POUR AMORTISSEUR INTEGRE

(30) Priority: 24.10.2005 US 729644 P
(43) Date of publication of application: 09.07.2008
(73) Proprietor: Camfil USA, Inc., Riverdale, New Jersey 07457 (US)
(72) Inventor: MORSE, Thomas C., Greenville, North Carolina 27858 (US); HUZA, Mark, Columbia, Maryland 21045 (US)
(74) Representative: Zacco Sweden AB
(86) International application number: PCT/US2006/041519
(87) International publication number: WO 2007/050626

(56) References cited:
- DE-A1- 3 045 396
- FR-A1- 2 261 483
- GB-A- 2 064 068
- US-A- 3 323 437
- US-A- 3 537 380
- US-A- 3 987 812
- US-A- 4 557 185
- US-A- 4 800 804
- US-A- 4 884 590

## Description

This application claims benefit from United States Provisional Patent Application Serial No. 60/729,644, filed October 24, 2005.

### BACKGROUND OF THE INVENTION

### Field of the Invention

The present invention generally relates to a housing assembly having an integrated damper, and more specifically, a housing assembly for an air filter having an integrated damper with a linear drive mechanism.

### Description of the Related Art

Cleanrooms are utilized in many industries for contamination control and to improve product yields. A plurality of filters, typically mounted in the ceiling of the cleanroom, are configured to remove particulate from air entering the cleanroom at a predetermined efficiency selected based upon the cleanliness requirements of the activities performed in the cleanroom. As particulates load the filtration media disposed in the filter, the airflow through the filter decreases as the pressure drop across the filter increases. Once the filter reaches a critical pressure drop, the filter is typically replaced.

On other applications, replacement of filters is scheduled based on time or processes performed within the cleanroom. For example, in many pharmaceutical and biotech cleanrooms, periodic replacement of filters is required to meet regulatory or owner specifications. To facilitate efficient replacement of the filter, a hood (housing) is typically mounted in the cleanroom ceiling in which the filter may be readily removed and replaced.

Ducted supply hoods with roomside replaceable filters are commonly used in pharmaceutical applications for cleaning supply air to cleanroom manufacturing and process areas, as well as to laboratory areas. Most of these hoods are supplied with adjustable dampers that allow customers to regulate the airflow without having to remove the filter from the hood. The most common types of dampers are guillotine, opposed blade and butterfly types. When completely closed, these dampers essentially stop the flow of air to the hood. In many cases, the leakage through a closed damper is negligible in terms of flow rate, but is significant when considered in the terms of contamination of a cleanroom.

Because these types of dampers do not provide a seal (i.e., are not leak-free or bubble-tight), they are inadequate when it comes to decontamination processes that require complete isolation of the cleanroom. For example, during routine testing and validation of filters installed in a pharmaceutical facility, one or more filters may be found damaged, leaking and/or requiring replacement. When a technician removes that filter from the hood, the "seal" between the cleanroom and the contaminated plenum and supply ducts upstream of the removed filter is broken. When the new filter is installed, the "seal" between those two areas is restored, but the cleanroom has already been contaminated by air and particulate entering the cleanroom from the contaminated area of the plenum and supply ducts. Thus, the facility owner must perform a decontamination process of the entire room before resuming cleanroom operations. This is a very time-consuming and costly process.

Therefore, there is a need for a filter housing assembly having improved sealing capabilities.
US 4,884,590 discloses a motor driven air valve comprising a unitary damper assembly. The damper assembly includes a generally planar damper mounted for movement axially of the inlet section. Because a portion of the damper assembly is splined, the damper cannot rotate and is driven axially within the valve by the rotation of the drive motor and drive gear.

### SUMMARY OF THE INVENTION

The filter housing assembly according to the invention is defined by independent claim 1. Embodiments are defined by the dependent claims. Embodiments of the invention generally include a housing assembly having an integrated damper with a linear drive mechanism. In one embodiment, a housing assembly includes a housing having an inlet and an outlet. A damper is disposed in the housing and is positionable to regulate flow entering the housing through the inlet. A linear drive mechanism is operably coupled to the damper and is adapted to linearly move the damper between positions that are spaced-apart from the housing and a position that closes the inlet. The linear drive mechanism is configured to move the damper linearly without rotating the damper.

In another embodiment, the damper has a non-planar shape that extends into the inlet when the damper is in a closed position. A means is provided for restraining the damper from rotating.

In another embodiment, a housing assembly includes an inlet port, an outlet port and a bag in/bag out filter access port. A filter receiving mechanism is disposed in the housing and is configured to direct gases flowing between the inlet and outlet ports through a filter installed in the housing. A first damper is disposed in the housing and is movable between positions that open and close the inlet port. A second damper is also disposed in the housing and is movable between positions that open and close the outlet port. A mechanism is provided in the housing that is configured to move the first damper between the open and closed positions without rotating the first damper, wherein the first damper is spaced apart from the housing when in the open position.

### BRIEF DESCRIPTION OF THE DRAWINGS

The teachings of the present invention can be readily understood by considering the following detailed description in conjunction with the accompanying drawings, in which:
Figure 1 is a cross-sectional view of one embodiment of a linear damper assembly disposed in a filter housing assembly;
Figure 2 is a partial sectional view of the housing assembly of Figure 1;
Figure 3 is a top view of a portion of an actuator adapted for linearly moving a dish of the damper assembly;
Figure 4 is a side view of a bushing;
Figure 5 is a partial side view of a rack of the actuator;
Figure 6 is a side cut-away view of one embodiment of a linear damper assembly disposed in a contamination housing assembly;
Figure 7 is another embodiment of a linear damper assembly disposed in a housing assembly;
Figure 8 is a perspective view of one embodiment of the linear damper assembly in an open position; and
Figure 9 is a perspective view of the linear damper assembly in a closed position.

To facilitate understanding, identical reference numerals have been used, where possible, to designate identical elements that are common to the figures. It is contemplated that elements and features of one embodiment may be beneficially incorporated in other embodiments without further recitation.

It is to be noted, however, that the appended drawings illustrate only exemplary embodiments of this invention and are therefore not to be considered limiting of its scope, for the invention may admit to other equally effective embodiments.

### DETAILED DESCRIPTION

### SELECTED EMBODIMENTS OF THE APPARATUS

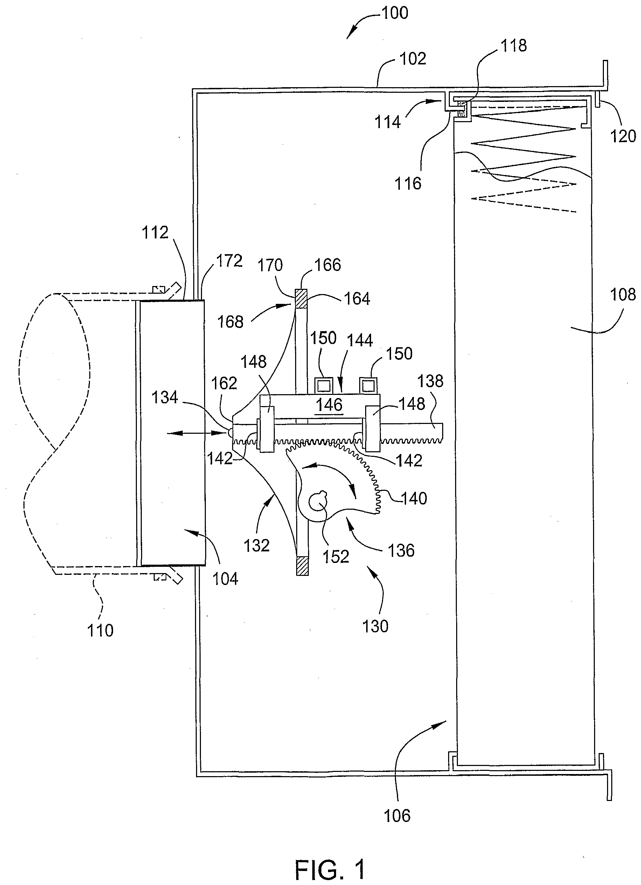

Figure 1 is a sectional view of one embodiment of a filter housing assembly 100 having a linear damper assembly 130. Although the housing assembly 100 is depicted in Figure 1 as a room-side replaceable filter module, it is contemplated that the benefits and features of the invention may be incorporated in contamination housings, filter diffusers, damper modules and other devices where robust flow control is desired in applications for cleanrooms, environmental and contaminant control, air conditioning, heating and ventilation systems, among other applications.

The housing assembly 100 generally includes a housing 102 having an inlet 104 and an outlet 106. The inlet 104 and the outlet 106 are formed through the housing 102 and allow gases flowing through a duct 110, shown in phantom, to be routed through the housing 102. The inlet 104 is bounded by a collar 112 to facilitate coupling the duct 110 to the housing 102. A filter element 108 is disposed in the outlet 106 and is sealingly coupled to the housing 102 in a manner that causes gases flowing between the inlet 104 and the outlet 106 to pass through the filter element 108. The filter element 108 may be retained in the housing 102 in any suitable manner, for example by a clip 120 or fastener.

In the embodiment depicted in Figure 1, the housing 102 includes an internal flange 114 that sealingly engages the filter element 108. In one embodiment, the flange 114 includes a knife-edge 116 that sealingly engages a seal 118 coupled to the filter element 108. The seal 118 may alternatively be coupled to the housing 102. The seal 118 may be a fluid seal, such as a gel, a gas gasket or other material suitable for providing a seal between the housing 102 and filter element 108. It is also contemplated, as in diffuser applications, that the filter element 108 may be potted, bonded, adhered or permanently coupled to the housing 102.

The damper assembly 130 is disposed in the housing 102 between the inlet 104 and the filter element 108. The damper assembly 130 generally includes a damper dish 132, a linear drive mechanism 136 and a bracket 144. The bracket 144 is coupled to the housing 102. The bracket 144 generally supports and positions the dish 132 and linear drive mechanism 136 within the housing 102. The linear drive mechanism 136 is configured to move the dish 132 linearly to open and close the inlet 104.

Referring back to Figure 1, the linear drive mechanism 136 may be any actuator suitable for causing the dish 132 to move linearly without rotation. For example, linear drive mechanism 136 may be a power screw, solenoid, electric motor, pneumatic cylinder, hydraulic cylinder or cam, scissor actuator, linear actuator among others. In the embodiment depicted in Figure 1, the actuator 138 includes a rack 138 and a gear 140. The rack 138 is coupled to a dish 132 by a fastener 134. It is contemplated that the dish 132 may be coupled to the rack 138 by other suitable fastening methods. To insure a perpendicular orientation between the dish 132 and the rack 138, the dish 132 includes a flat center section 162 that seats against the flat end of the rack 138.

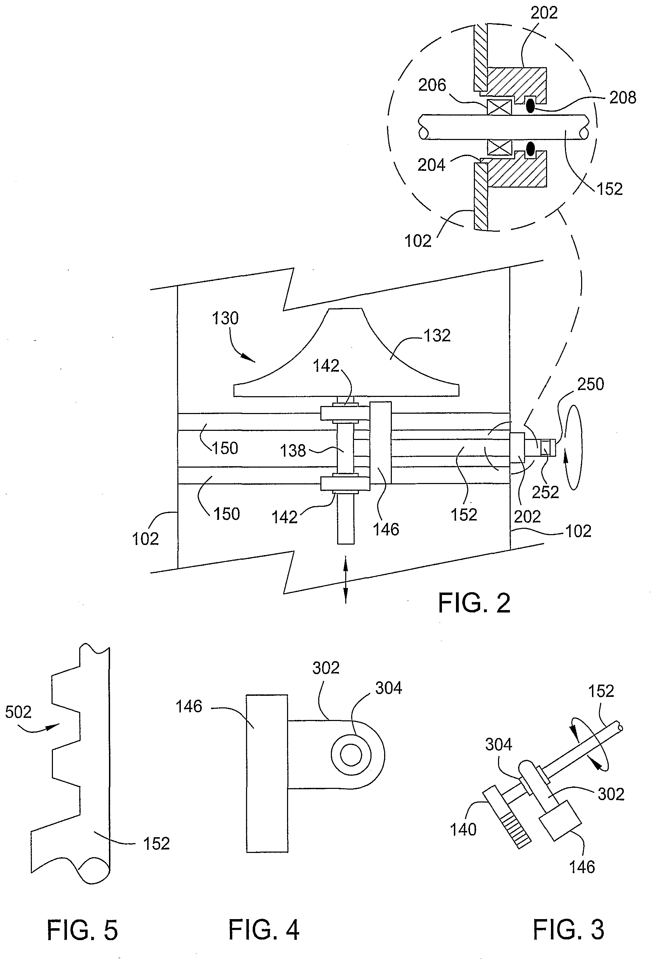

In the embodiment depicted in Figure 1, the gear 140 is a pinion gear, although another gear or gears may be utilized. The pinion gear 140 is coupled to a shaft 152. The size of the pinion gear 140 may be selected to provide a predetermined stroke of the rack 138, and to provide a predetermined actuation force. In one embodiment, the shaft 152 extends through the housing 102 such that the rotational orientation of the pinion gear 140, and thus, the position of the rack 138 and dish 132, may be controlled. The shaft 152 may include a key or other suitable connection with the pinion gear 140 that insures efficient transfer of motion between the shaft 152 and pinion gear 140. In one embodiment, the intermeshing teeth of the rack 138 and pinion gear 140 include flat crests and trenches that prevent the dish 132 from rotating as the rack 138 is advanced. The flat crests and trenches of the rack 138 are illustrated in Figure 5, with the pinion gear 140 being similarly configured.

The rack 138 is slidably mounted through a set of bushings 142 that are coupled to the bracket 144. The bushings 142 may be comprised of any suitable bearing material, such as DELRIN® or brass. The bushings 142 may alternatively be roller bearings. The rack 138 may be exchanged to provide longer or short actuation strokes which correspondingly sets the orifice area between the dish 132 and the inlet 104.

In the embodiment depicted in Figure 1, the bracket 144 includes a rack support 146 having two tabs 148 extending therefrom. The bushings 142 are mounted in the tabs 148 in a spaced-apart relation to enhance control of the motion and orientation of the dish 132. The rack support 146 is coupled to one or more cross bars 150 extending between opposite walls of the housing 102. The cross bars 150 may be welded, riveted or fastened to the housing 102.

The dish 132 generally includes a conical face 160 having a sealing section 164 located adjacent a perimeter 166 of the dish 132. The sealing section 164 is adapted to engage the housing 102 and/or the collar 112 in a manner that facilitates sealing the air flow through the inlet 104. In the embodiment depicted in Figure 1, the sealing section 164 includes a channel 168 having a seal 170 disposed therein. The seal 170 is configured to engage with a lip 172 extending from one of the collar 112 or the housing 102. The seal 170 may be a gasket, bladder or fluid seal. It is also contemplated that the seal 170 may be coupled to the collar 112 or the housing 102 and configured to sealingly engage with the dish 132. The non-rotation of the dish 132 provided by the rack 138 and pinion gear 140 discussed above, prevents shearing of the seal as the dish 132 and lip 170 engage, thereby extending the life and performance of the seal. It is contemplated that the dish 132 may rotate when spaced from the closed position, as long as the linear drive mechanism 136 does not cause the dish 132 to rotate while sealing the inlet 104.

Figure 2 depicts a partial sectional view of the housing 102 illustrating the shaft 152 extending through the housing 102. To prevent leakage from the housing assembly 100 around the shaft 152, a bushing 202 is sealably fastened around a hole 204 formed through the housing 102 to facilitate passage of the shaft 152. The bushing 202 may be sealed to the housing 102 by any suitable method. In the embodiment depicted in Figure 2, the bushing 202 is continuously welded to the housing 102.

A bearing 206 is press-fit into the bushing 202 and engages the shaft 152 to facilitate rotation. A seal 208 is disposed in one end of the bushing 202 to prevent air leakage between the bushing 202 and the shaft 152. The seal 208 may be an o-ring, cup seal, gasket, fluid seal or other seal suitable for preventing leakage of gas around the shaft 152 and through the hole 204 of the housing 102.

The shaft 152 includes terminal end 250 disposed outside the housing assembly 100. The terminal end 250 generally includes a drive feature 252 that facilitates inducing rotational motion to the shaft 152. In one embodiment, the drive feature 252 is a flat formed in the sides of the shaft 152. Other suitable drive features include, but are not limited to, hex heads, knurled surface, key ways, slots and the like. Although the terminal end 250 is shown extending from the side of the housing 102, it is contemplated that the drive feature 252 may be accessible from the other locations, such as from the outlet-side of the housing 100.

Referring to Figures 3-4, the inner end of the shaft 152 proximate the pinion gear 140 is supported by a second bearing 304. The second bearing 304 is disposed in a tab 302 extending from the rack support 146. The second bearing 304 may be similar to the bearing 206.

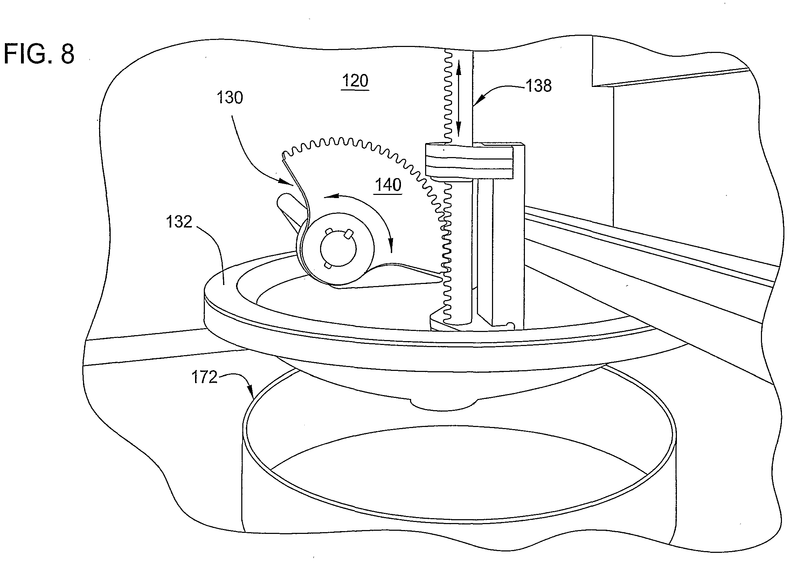

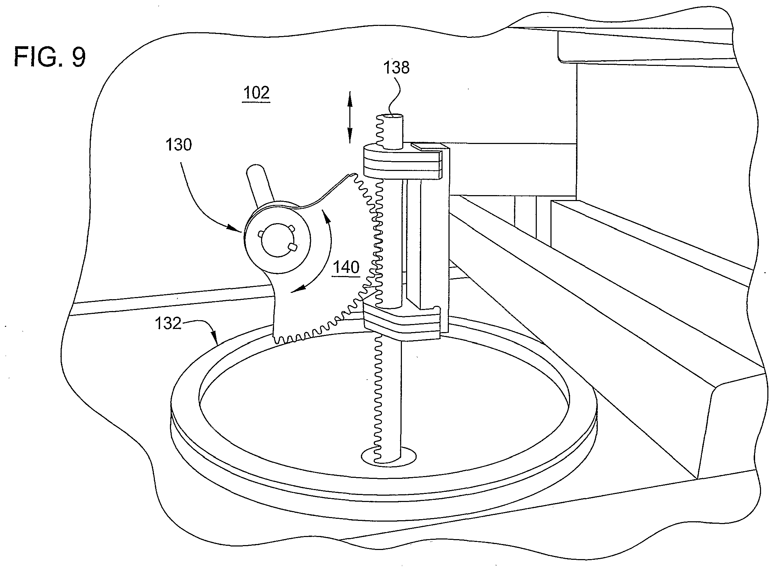

In operation, the shaft 152 is selectively rotated to rotate the pinion gear 140. The rotating pinion gear 140 advances the rack 138, thereby linearly moving the dish 132. As the motion of the dish 132 is substantially perpendicular to the plane of the opening defined by the inlet 104, the seal 170 uniformly engages the lip 172, thereby enhancing seal uniformity and performance. Moreover, as the dish 132 is maintained centered relative to the flow entering (or exiting) the housing 102 through the inlet 104, the flow orifice defined between the dish 132 and lip 172 is uniform, thus, promoting flow uniformity through the filter element 108. The dish 132 is illustratively shown in a position closing and spaced from the inlet 104 in Figures 8-9. The spacing of the dish 132 from the lip 172 may be selected to provide a desired air flow rate through the filter element 108.

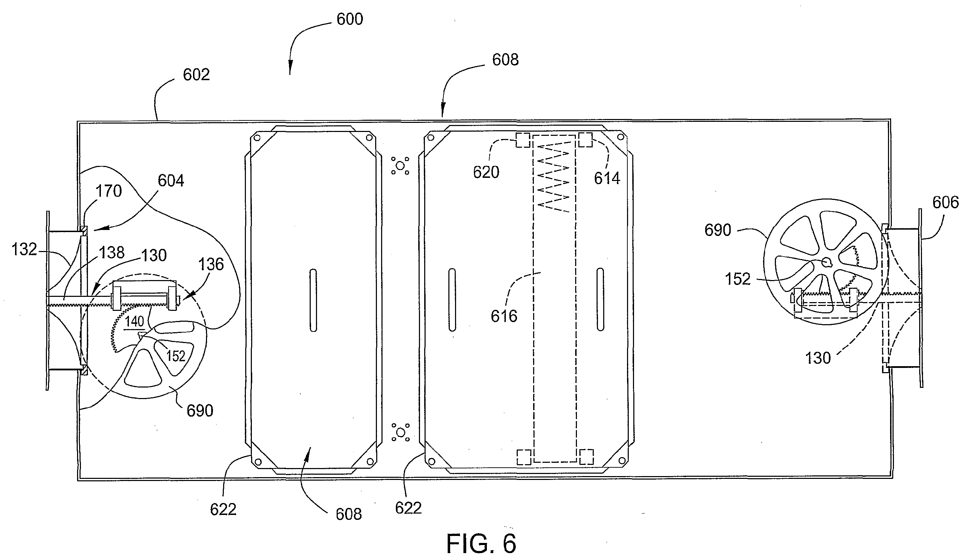

Figure 6 is a sectional view of one embodiment of a contamination housing assembly 600. A contamination housing assembly that may be adapted to benefit from the invention is available from Camfil Farr, Inc., located in Riverdale, New Jersey.

In one embodiment, the housing assembly 600 includes a housing 602 having an inlet 604, an outlet 606 and at least one access port 608. The inlet 604 and outlet 606 are formed through the housing 602 and arrange to direct gases flowing through the housing 602. The access port 608 is configured to permit access to the interior of the housing 602, for example, for filter change-out, scanning a filter disposed in an adjacently coupled housing, and the like.

The housing 602 may be fabricated from a metal, such as aluminum, steel and stainless steel, or other suitable material. The housing 602 has a construction that forms a pressure barrier between gases flowing therethrough and an environment outside the housing 602. In the embodiment depicted in Figure 6, the housing 602 is a hollow rectangular body fabricated from continuously welded metal sheets.

The housing 602 additionally includes sealing flange 614 that sealingly engages a filter element 616 disposed in the housing assembly 600. A linkage mechanism 620 is provided in the housing 602 and is configured to move the filter element 616 between a position sealingly engaged with the flange 614 and a position clear of the flange 614. A seal, not shown, like the seal 170 described above, is disposed between the filter element 616 and flange 164 to prevent flow from bypassing the filter element 616.

The access port 608 is configured to facilitate removal of the filter element 616 from the housing 602 and is selectively sealed by a door 622. The access port 608 is circumscribed by a bagging ring (not shown) that is utilized to access the interior of the housing and/or remove and replace the filter element 616.

At least one end of the contamination housing 600 includes a linear damper assembly 130. The linear damper assembly 130 is as described above. In the embodiment depicted in Figure 6, an external actuator 690 is coupled to the shaft 152 of the damper assembly 130 on the exterior of the housing 602. The external actuator 690 may be any device or object suitable for controlling the rotation of the shaft 152. In one embodiment, the external actuator 690 is a wheel. It is contemplated that the external actuator 690 may alternatively be a motor, pneumatic cylinder, hydraulic cylinder or a lever, among others.

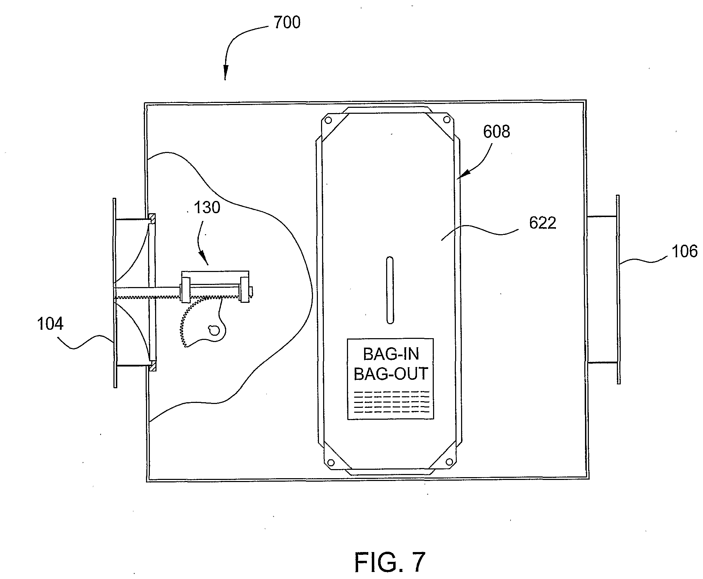

Figure 7 depicts one embodiment of a housing assembly 700 having a damper assembly 130. The housing 700 may be configured with or without an access port 608. The housing assembly 700 may be utilized as a stand-alone damper (shutoff and/or flow control), or as an access port in a containment system, among others. The damper assembly 130 may be operated as described with reference to the embodiments above to control flow through the housing assembly 700.

### LIFE CYCLE TESTING

A housing assembly having an integrated linear damper assembly as described above was tested to determine if any significant or adverse amount of wear will occur between the fabricated pinion gear and rack (both fabricated from stainless steel); and if any significant or adverse amount of wear will occur in the bronze bushings used to support the rack and the damper shaft.

### TEST SETUP

A one-high by one-wide containment housing was modified to accept the integrated linear damper assembly. The integrated damper assembly utilized a 12" diameter stainless steel dish. A medium durometer silicone sponge gasket was cut by hand using a template. RTV was placed in the bottom of the channel of the dish. The gasket was seated in the channel, using the RTV as an adhesive to hold the gasket in the channel. The edges of the sponge gasket were not sealed in the channel, in order to test the seal with minimum adhesion to the dish.

The damper actuator included a three quarter inch diameter stainless steel shaft with keyway, which is typically used on conventional flat blade dampers. A pinion gear was fabricated from one quarter inch thick 304 stainless steel. Three gear pieces were stacked on top of each other with the keyways aligned and welded together to form a single gear about three quarter inch thick. The rack was manufactured from 20mm diameter, 304 stainless steel shaft. The rack travels in a linear fashion and was held in place and aligned using bronze bushings coupled to the bracket. A bronze bushing was also installed in a support member to hold and align the damper shaft and assure proper meshing of the gear teeth with the rack.

A lip extending from a 12 inch (304.8 mm) diameter, 304 stainless steel collar circumscribing the inlet was used to form that knife-edge circumscribing the inlet. The collar was continuously welded to a piece of 11 gauge 304 stainless steel that was continuously welded to the upstream flange of the housing.

As an actuator coupled to the damper assembly rotated to turn the pinion gear, the rack is advanced linearly toward the inlet. The rack pushes the stainless steel dish toward the knife-edge mounted in the endplate of the housing. The silicone gasket around the perimeter of the dish sealed against the knife-edge. In one embodiment, the flat form of the teeth of the rack, engaged with the flat form of the teeth of the shaft substantially prevents rotation of the shaft.

### TEST EQUIPMENT & INSTRUMENTATION

- Elomatic 350 Series Pneumatic Actuator with spring return
   ∘ Model: ESO350.U2A03B.27K0
   ∘ Serial No.: 22221100020
- Blank-off Plate with Ball Valve and static pressure connection
- OMRON Timer:
   ∘ Model: H3CR-F8300
- Dwyer Flex-Tube Manometer:
- Gast Vacuum Pump

### TEST PROCEDURE

The damper was bubble-tested in accordance with CFW-1000 CFW-10003, Revision 3: *Pressure Decay*/*Structural Capability*/*Bubble Leak Testing.* The containment housing with integrated damper was placed on a cart and a blank-off plate with ball valve and static pressure port was attached to the opposite end of the inlet collar that also serves as the knife-edge. This space was pressurized such that the damper was being pushed away from the knife-edge. The pressure was measured with a U-tube manometer that provided a differential pressure reading between the pressurized space and atmospheric pressure. Soap solution was sprayed on the interface between the knife-edge on the inlet ring and the silicone gasket that it was sealing against. Visual inspections were conducted for a period of 5 minutes to ensure bubble-tightness (i.e., a leak free condition).

Generally, bubble-tight dampers are bubble-leak tested at >+10" water gauge (w.g.) (2.50 kPa). In some circumstances, they are required to be bubble-tight at >+15" w.g. (3.74 kPa). During this test, the linear damper was tested at >+18" w.g. (4.48 kPa).

After the initial bubble-test, power and compressed air were supplied to the actuator, and the damper was cycled between open and closed positions. Bubble-tests were conducted after more than 5,000, 10,000 and 15,000 cycles using the method described above. Visual observations were conducted throughout the entire test to determine the effect of rapid repeated cycling on the durability of the seal and actuation mechanism.

### RESULTS

The results of the cycle tests are as follows:

**Table 1: Cycle Test Results**

| **Cumulative # of Cycles** | **Pressure** | **Pass or Fail** | **Comments** |
|---|---|---|---|
| 0 | >17" w.g. (4.23 kPa) | Pass | Initial Test |
| 5585 | >28" w.g. (6.97 kPa) | Pass | Damper was left closed the previous night. Indentation in silicone gasket, but still passed the bubble-tight test. No indication of mechanism wear. |
| 10,289 | >+18" w.g. (4.48 kPa) | Pass | Damper was left closed the previous night. Indentation in silicone gasket, but still passed the bubble-tight test. No indication of mechanism wear. |
| 15,260 | >+18" w.g. (4.48 kPa) | Pass | Damper was left closed the previous night. Indentation in silicone gasket, but still passed the bubble-tight test. No indication of mechanism wear. |

As shown in Table 1, the damper was bubble-tight at >+18" w.g. (4.48 kPa) for each test conducted. It is believed that the damper would remain bubble-tight at higher pressures. The test was terminated after 15,260 cycles without failure to facilitate use of the lab for other projects. Upon visual observation and inspection of the mechanism for damper actuation after conclusion of the test, no evidence of mechanism wear, degradation or failure was apparent. There also was no visual evidence of gear wear.

The tested damper assembly compares favorably to conventional flat-blade dampers and dish-style dampers. The extended life is believed attributable to the design and construction of the damper assembly, which utilizes linear motion that has reduce bushing wear and stress compared to rotating blade. Moreover, the linear motion and the use of gearing reduces the power required to close the damper, thereby minimizing actuator costs.

### CONCLUSIONS

The damper was proven to remain bubble-tight at >+18" w.g. (4.48 kPa) at more than 15,000 cycles, which is 50 percent greater than the industry requirements (bubble-tight at +10" w.g. (2.50 kPa) after 10,000 cycles). The robustness and durability of the mechanism are superior to both the flat-blade damper and dish-style damper designs, as proven by the lack of wear even after more than 15,000 cycles.

Although various embodiments which incorporate the teachings of the present invention have been shown and described in detail herein, those skilled in the art can readily devise many other varied embodiment that still incorporate these teachings.

## Claims

1. A filter housing assembly (100;600;700), comprising:
a housing (102;602) having an inlet (104:604),an outlet (106;606) and an internal flange for sealingly engaging a filter element, a damper (132) movable between positions that open and close the inlet (102;602), and means for moving the damper, wherein the damper (132) is disposed in the housing (102;602) in an orientation that remains centered with respect to the inlet, and that the means for moving the damper is a linear drive mechanism (136) adapted to move the damper (132) linearly without rotation thereof, wherein the linear drive mechanism comprises a rack (138) and a pinion gear (140) that prevent rotation of the damper when the rack is moved in a linear direction, and wherein the damper is fixed to the rack.

2. The filter housing assembly (100;600;700) according to claim 1, wherein the damper (132) has a non-planar shape that extends into the inlet when the damper is in the closed position.

3. The filter housing assembly (100;600;700) according to claim 2, wherein the damper (132) is substantially conical.

4. The filter housing assembly (102) according to any one of the preceding claims, wherein the filter element (108) is disposed in the housing (102).

5. The filter housing assembly (100;600) according to any one of the preceding claims, further comprising a seal (170) interfacing the damper (132) and the housing (102;602) to providing a bubble-tight seal of the inlet (104;604) when the damper is in closed position.

6. The filter housing assembly (100;600) according to claim 5, wherein said seal (170) is coupled to a perimeter of the damper (132).

7. The filter housing assembly (100;600) according to claim 5 or 6, wherein the seal (170) is a gasket, bladder or fluid seal.

8. The filter housing assembly (100;600;700) according to any of the preceding claims, wherein the means for preventing rotation of the damper (132) comprises a first feature coupled to the housing (102;602) and fixed in orientation relative to the housing, and a second feature fixed in orientation relative to the damper (132), wherein the second feature engages the first feature in a manner that permits linear motion without rotation.

9. The filter housing assembly (100;600;700) according to any of the preceding claims, wherein the means for preventing rotation of the damper (132) comprises mating threaded members (138,140) having truncated crests and valleys.

10. The filter housing assembly (100;600;700) according to any of the preceding claims , wherein the rack (138) has a non-circular cross section, and a bearing or guide (142) circumscribing the rack, wherein the bearing or guide has a rack accepting aperture mating the shape of the rack (138).

11. The filter housing assembly (600;700) according to any of the preceding claims , comprising a bag in/bag out filter access port (608), and a filter receiving mechanism disposed in the housing and configured to direct gases flowing between the inlet and the outlet through a filter installed in the housing.

12. The filter housing assembly (600) according to any of the preceding claims, wherein a second damper movable between positions that open and close the outlet (606) is provided, said second damper being similar to the damper (132) movable between positions that open and close the inlet (604) and being driven by a drive mechanism similar to the drive mechanism for the damper movable between positions that open and close the inlet.

## Patentansprüche

1. Filtergehäusebaugruppe (100; 600; 700), umfassend:
ein Gehäuse (102; 602), das einen Einlass (104; 604), einen Auslass (106; 606) und einen internen Flansch zum abdichtenden Eingreifen in ein Filterelement aufweist, eine Klappe (132), die zwischen Positionen bewegbar ist, die den Einlass (102; 602) öffnen und schließen, und ein Mittel zum Bewegen der Klappe, wobei die Klappe (132) in dem Gehäuse (102; 602) in einer Ausrichtung angeordnet ist, die in Bezug auf den Einlass zentriert bleibt, und wobei das Mittel zum Bewegen der Klappe ein Linearantriebsmechanismus (136) ist, der angepasst ist, die Klappe (132) linear ohne Drehung zu bewegen, wobei der Linearantriebsmechanismus eine Zahnstange (138) und ein Ritzel (140) umfasst, die eine Drehung der Klappe verhindern, wenn die Zahnstange in einer Linearrichtung bewegt wird und wobei die Klappe an der Zahnstange fixiert ist.

2. Filtergehäusebaugruppe (100; 600; 700) nach Anspruch 1, wobei die Klappe (132) eine nicht ebene Form aufweist, die sich in den Einlass erstreckt, wenn sich die Klappe in der geschlossenen Position befindet.

3. Filtergehäusebaugruppe (100; 600; 700) nach Anspruch 2, wobei die Klappe (132) im Wesentlichen kegelförmig ist.

4. Filtergehäusebaugruppe (102) nach einem der vorhergehenden Ansprüche, wobei das Filterelement (108) in dem Gehäuse (102) angeordnet ist.

5. Filtergehäusebaugruppe (100; 600) nach einem der vorhergehenden Ansprüche, ferner umfassend eine Dichtung (170) an der Kontaktstelle zwischen der Klappe (132) und dem Gehäuse (102; 602), um eine blasendichte Abdichtung des Einlasses (104; 604) bereitzustellen, wenn sich die Klappe in der geschlossenen Position befindet.

6. Filtergehäusebaugruppe (100; 600) nach Anspruch 5, wobei die Dichtung (170) an einen Umfang der Klappe (132) gekoppelt ist.

7. Filtergehäusebaugruppe (100; 600) nach Anspruch 5 oder 6, wobei die Dichtung (170) eine Manschette, ein Balg oder eine Flüssigkeitsdichtung ist.

8. Filtergehäusebaugruppe (100; 600; 700) nach einem der vorhergehenden Ansprüche, wobei das Mittel zum Verhindern einer Drehung der Klappe (132) ein erstes Merkmal, das an das Gehäuse (102; 602) gekoppelt und in Ausrichtung auf das Gehäuse fixiert ist, und ein zweites Merkmal umfasst, das in Ausrichtung auf die Klappe (132) fixiert ist, wobei das zweite Merkmal in einer Weise mit dem ersten Merkmal in Eingriff steht, die eine Linearbewegung ohne Drehung ermöglicht.

9. Filtergehäusebaugruppe (100; 600; 700) nach einem der vorhergehenden Ansprüche, wobei das Mittel zum Verhindern einer Drehung der Klappe (132) ineinandergreifende Gewindeelemente (138, 140) umfasst, die abgeflachte Gewindespitzen und -vertiefungen aufweisen.

10. Filtergehäusebaugruppe (100; 600; 700) nach einem der vorhergehenden Ansprüche, wobei die Zahnstange (138) einen nicht kreisförmigen Durchschnitt und ein Lager oder eine Führung (142) aufweist, das/die die Zahnstange begrenzt, wobei das Lager oder die Führung eine Zahnstangenaufnahmeöffnung aufweist, in die die Form der Zahnstange (138) hineinpasst.

11. Filtergehäusebaugruppe (600; 700) nach einem der vorhergehenden Ansprüche, umfassend eine Bag-In-/Bag-Out-Filterzugangsöffnung (608) und einen Filteraufnahmemechanismus, der in dem Gehäuse angeordnet und ausgestaltet ist, Gase, die zwischen dem Einlass und dem Auslass strömen, durch einen Filter zu leiten, der in dem Gehäuse eingebaut ist.

12. Filtergehäusebaugruppe (600) nach einem der vorhergehenden Ansprüche, wobei eine zweite Klappe vorgesehen ist, die zwischen Positionen bewegbar ist, die den Auslass (606) öffnen und schließen, wobei die zweite Klappe der Klappe (132) ähnlich ist, die zwischen Positionen bewegbar ist, die den Einlass (604) öffnen und schließen, und die durch einen Antriebsmechanismus angetrieben werden, der dem Antriebsmechanismus für die Klappe ähnlich ist, die zwischen Positionen bewegbar ist, die den Einlass öffnen und schließen.

## Revendications

1. Ensemble formant boîtier à filtre (100 ; 600 ; 700), comprenant :
un boîtier (102 ; 602) présentant une entrée (104 ; 604), une sortie (106 ; 606) et une collerette interne pour interagir de manière étanche avec un élément filtrant ; un registre (132) actionnable entre des positions permettant d'ouvrir et de fermer l'entrée (102 ; 602) ; et un moyen permettant d'actionner le registre ; ledit registre (132) étant disposé dans le boîtier (102 ; 602) selon une orientation demeurant centrée par rapport à l'entrée, et ledit moyen permettant d'actionner le registre consistant en un mécanisme d'entraînement linéaire (136) apte à produire un mouvement linéaire du registre (132) sans rotation de ce dernier, ledit mécanisme d'entraînement linéaire comprenant une crémaillère (138) et un pignon (140) qui empêchent la rotation du registre lorsque la crémaillère se déplace dans un sens linéaire, et ledit registre étant fixé à la crémaillère.

2. Ensemble formant boîtier à filtre (100 ; 600 ; 700) selon la revendication 1, dans lequel le registre (132) est de forme non plane et pénètre dans l'entrée lorsque le registre est en position fermée.

3. Ensemble formant boîtier à filtre (100 ; 600 ; 700) selon la revendication 2, dans lequel le registre (132) est sensiblement conique.

4. Ensemble formant boîtier à filtre (102) selon l'une quelconque des revendications précédentes, dans lequel l'élément filtrant (108) est disposé dans le boîtier (102).

5. Ensemble formant boîtier à filtre (100 ; 600) selon l'une quelconque des revendications précédentes, comprenant en outre un dispositif d'étanchéité (170) à l'interface du registre (132) et du boîtier (102 ; 602), assurant une étanchéité à la bulle à l'entrée (104 ; 604) lorsque le registre est en position fermée.

6. Ensemble formant boîtier à filtre (100 ; 600) selon la revendication 5, dans lequel ledit dispositif d'étanchéité (170) est couplé à un périmètre du registre (132).

7. Ensemble formant boîtier à filtre (100 ; 600) selon la revendication 5 ou 6, dans lequel le dispositif d'étanchéité (170) est un joint d'étanchéité, une vessie ou un joint à fluide.

8. Ensemble formant boîtier à filtre (100 ; 600 ; 700) selon l'une quelconque des revendications précédentes, dans lequel le moyen empêchant la rotation du registre (132) comprend un premier élément couplé au boîtier (102 ; 602) et d'orientation fixe par rapport au boîtier, et un second élément d'orientation fixe par rapport au registre (132), ledit second élément coopérant avec le premier élément de manière à permettre un déplacement linéaire sans rotation.

9. Ensemble formant boîtier à filtre (100 ; 600 ; 700) selon l'une quelconque des revendications précédentes, dans lequel le moyen empêchant la rotation du registre (132) comprend des éléments filetés complémentaires (138, 140) présentant des crêtes tronquées et des creux.

10. Ensemble formant boîtier à filtre (100 ; 600 ; 700) selon l'une quelconque des revendications précédentes, dans lequel la crémaillère (138) est de section transversale non circulaire et possède un palier ou guide (142) entourant la crémaillère, ledit palier ou guide présentant une ouverture de réception de crémaillère correspondant à la forme de la crémaillère (138).

11. Ensemble formant boîtier à filtre (600 ; 700) selon l'une quelconque des revendications précédentes, comprenant une ouverture d'accès pour filtre « bag in/bag out » (608), et un mécanisme de réception de filtre disposé dans le boîtier et conçu pour diriger, à travers un filtre installé dans le boîtier, les gaz s'écoulant entre l'entrée et la sortie.

12. Ensemble formant boîtier à filtre (600) selon l'une quelconque des revendications précédentes, dans lequel il est prévu un second registre actionnable entre des positions permettant d'ouvrir et de fermer la sortie (606), ledit second registre étant similaire au registre (132) actionnable entre des positions permettant d'ouvrir et de fermer l'entrée (604) et étant entraîné par un mécanisme d'entraînement similaire au mécanisme d'entraînement du registre actionnable entre des positions permettant d'ouvrir et de fermer l'entrée.
